# FASCICULE DE BREVET EUROPEEN

(11) **EP 3 408 777 B1**
(45) Date de publication et mention de la délivrance du brevet: **11.05.2022**
(21) Numéro de dépôt: 17706283.3
(22) Date de dépôt: 24.01.2017
(51) Int. Cl.: G06F 21/35, G06F 21/79, G06F 21/81, G06F 21/88

(54) **SYSTÈME DE CONTRÔLE D'ACCÈS**
ZUGANGSSTEUERUNGSSYSTEM
ACCESS CONTROL SYSTEM

(30) Priorité: 25.01.2016 FR 1650570
(43) Date de publication de la demande: 05.12.2018
(73) Titulaire: Gascuel, Jacques, Claude, Guy, AD700 Escaldes-Engordany (AD)
(72) Inventeur: Gascuel, Jacques, Claude, Guy, AD700 Escaldes-Engordany (AD)
(74) Mandataire: Gevers & Orès
(86) Numéro de dépôt international: PCT/FR2017/050139
(87) Numéro de publication internationale: WO 2017/129887

(56) Documents cités:
- US-A1- 2008 098 134
- US-A1- 2014 283 018
- US-B2- 9 177 453

## Description

### 1. Domaine technique de l'invention

L'invention concerne un système de contrôle d'accès. En particulier, l'invention concerne un système de contrôle d'accès à un dispositif protégé, par exemple l'accès à une ou plusieurs mémoires protégées d'un composant électronique.

### 2. Arrière-plan technologique

Les systèmes de contrôle d'accès permettent de restreindre l'accès à un dispositif protégé uniquement aux personnes qui disposent des autorisations nécessaires pour accéder au dispositif protégé. Ce dispositif protégé peut être par exemple une mémoire contenant des données numériques dont on veut restreindre l'accès, ou un équipement physique verrouillé dont l'utilisation est soumise à une autorisation d'accès. La demande de brevet US2008098134 A1 divulgue par exemple un dispositif de protection d'une mémoire qui effectue une comparaison entre une clé contenue dans un registre du dispositif et une clé stockée dans un transpondeur et qui est obtenue par le biais d'une interface sans-fil. En cas de correspondance, un interrupteur est fermé ce qui offre accès à la mémoire.

Les systèmes de contrôle d'accès actuels mettent en œuvre généralement un ou plusieurs facteurs d'authentification avant de délivrer une autorisation d'accès. Chaque facteur d'authentification définit un ou plusieurs critères de validité d'une clé qui lui est présentée, une clé valide permettant de placer le facteur d'authentification dans un état dit déverrouillé. Lorsque l'ensemble des facteurs d'authentification est déverrouillé, l'accès est autorisé. Il peut par exemple s'agir d'un mot de passe qui est comparé avec une liste de mots de passe autorisés.

La vérification de la correspondance des facteurs d'authentification avec au moins une clé et le paramétrage des facteurs d'authentification sont souvent effectués par le biais d'une connexion à un serveur externe, notamment via Internet. Cette solution présente des risques d'interception de données à la volée par un opérateur malveillant permettant d'obtenir des informations soit sur le facteur d'authentification mis en œuvre, soit sur la clé soumise au facteur d'authentification.

En outre, les systèmes de contrôles d'accès actuels sont peu modulables, et les facteurs d'authentification sont facilement identifiables par toute personne malveillante souhaitant accéder au dispositif protégé sans autorisation. Les attaques destinées à obtenir l'accès sont donc focalisées sur ces facteurs.

### 3. Objectifs de l'invention

L'invention vise à pallier au moins certains des inconvénients des systèmes de contrôle d'accès connus.

En particulier, l'invention vise à fournir, dans au moins un mode de réalisation de l'invention, un système de contrôle d'accès autonome, ne nécessitant pas de connexion avec un serveur externe.

L'invention vise aussi à fournir, dans au moins un mode de réalisation, un système de contrôle d'accès permettant un paramétrage personnalisable des facteurs d'authentification.

### 4. Exposé de l'invention

Pour ce faire, l'invention concerne un système de contrôle d'accès à un dispositif protégé par au moins un facteur d'authentification pré-paramétré, chaque facteur d'authentification définissant au moins un critère de validité d'une clé et étant dans un état dit déverrouillé si une clé qui lui est présentée répond aux critères de validité, et un état dit verrouillé si aucune clé qui lui est présentée ne répond aux critères de validité, comprenant :
- une unité de contrôle d'accès comprenant :
   - un dispositif de communication sans-fil courte portée, comprenant un module de transmission sans-fil de données et un module de récolte d'énergie électrique,
   - un module de réception de clés, adapté pour recevoir au moins une clé,
   - un module de vérification des facteurs, adapté pour vérifier la validité de chaque facteur d'authentification pré-paramétré avec au moins une clé reçue par le module de réception de clé et fournir une autorisation d'accès si l'ensemble des facteurs d'authentification sont dans l'état déverrouillé,
   - au moins un chemin d'accès, adapté pour permettre l'accès au dispositif protégé,
   - au moins un commutateur pilotable, configuré pour ouvrir ou fermer le chemin d'accès au dispositif protégé, le chemin d'accès étant par défaut fermé et étant ouvert en cas de réception d'une autorisation d'accès provenant du module de vérification,
   - une unité d'administration, adaptée pour permettre de pré-paramétrer chaque facteur d'authentification par interaction avec le module de transmission sans-fil de données du dispositif de connexion de l'unité de contrôle d'accès,
   - une unité utilisateur, distincte de l'unité d'administration, configurée pour transmettre au moins une clé au module de réception de clés, via le module de transmission sans-fil de données.

Un système de contrôle d'accès selon l'invention permet donc de gérer l'accès à un dispositif protégé de façon autonome, sans connexion à un serveur externe, le paramétrage des facteurs d'utilisation et la vérification des facteurs d'utilisation sont effectués uniquement dans l'unité de contrôle d'accès ou à proximité, les interactions avec l'unité de contrôle d'accès se faisant uniquement via une connexion sans-fil courte portée (inférieure à 100m). Le système d'accès est donc plus résistant aux attaques par interception de trames, car les interactions critiques (notamment pré-paramétrage des facteurs d'authentification par l'administrateur grâce à l'unité d'administration et tentative d'accès par un utilisateur grâce à une unité utilisateur) sont effectuées uniquement en local à courte portée.

De plus, les facteurs d'authentification sont entièrement paramétrables au préalable par un administrateur humain, via l'unité d'administration.

L'unité d'administration et l'unité utilisateur sont des équipements permettant la transmission de données sans-fil et chacun contrôlés par un opérateur humain, appelés respectivement administrateur et utilisateur. L'unité d'administration et l'unité utilisateur sont donc distinctes, c'est-à-dire qu'ils sont des équipements distincts utilisés par des opérateurs humains distincts. L'équipement est par exemple un terminal de communication tel qu'un ordiphone (communément appelé *smartphone* en anglais). L'administrateur définit les facteurs d'authentification grâce à l'unité d'administration et l'utilisateur tente de déverrouiller l'accès au dispositif protégé avec l'unité utilisateur. Des clés peuvent être fournies manuellement par l'administrateur à l'utilisateur, par exemple par validation sur une application ou un logiciel installé sur l'unité d'administration et transmission à l'unité utilisateur.

Le système est en outre autonome grâce à la récolte d'énergie effectuée par le module de récolte d'énergie électrique. Cette récolte d'énergie est par exemple une récolte d'énergie photovoltaïque, cinétique, thermoélectrique, etc., et est choisie en fonction du dispositif à protéger, de son emplacement, de sa fonction, etc. La récolte d'énergie permet au système de ne pas être uniquement tributaire d'une batterie, laquelle a une durée de vie limitée. Le système peut toutefois comprendre un dispositif de stockage d'énergie, rechargé grâce à la récolte d'énergie (permettant par exemple de stocker l'énergie photovoltaïque le jour pour une utilisation du système la nuit).

Le dispositif protégé, dont l'accès et/ou l'utilisation sont contrôlés par le système, peut être de différents types, par exemple un moyen de stockage lisible par ordinateur (mémoire de type clé USB, disque dur externe ou interne, etc.), un véhicule (voiture, vélo ou trottinette en libre-service protégés, etc.), une porte d'accès, etc.

Le chemin d'accès permettant l'accès au dispositif protégé est par exemple un bus de transmission de données. Le commutateur pilotable permet de contrôler physiquement ce bus de transmission. Le chemin d'accès est ouvert (c'est-à-dire que l'on peut accéder au dispositif protégé) lorsque le commutateur est électriquement fermé et inversement, le chemin d'accès est fermé lorsque le commutateur est électriquement ouvert.

Ainsi, par exemple lorsque le dispositif protégé est un support de stockage, si le support de stockage est branché à un ordinateur et que le chemin d'accès est fermé, la présence du support de stockage n'est pas détectée par l'ordinateur, et est donc non détectable par un opérateur malveillant non autorisé.

Avantageusement et selon l'invention, chaque facteur d'authentification définit au moins un critère de validité d'une clé choisie dans le groupe comprenant les clés suivantes :
- mot de passe,
- clé transmise par l'unité d'administration,
- données de géolocalisation du dispositif protégé et/ou de l'unité utilisateur,
- valeurs mesurées par un ou plusieurs capteurs électroniques,
- données temporelles,
- clé provenant d'une balise de proximité.

Selon cet aspect de l'invention, les facteurs d'authentification peuvent être de différentes sortes et peuvent être combinés afin d'offrir la meilleure sécurité possible, en fonction du contexte d'utilisation du dispositif protégé.

Un dispositif protégé par le système de contrôle est ainsi accessible uniquement si l'ensemble des facteurs d'authentification sont déverrouillés : par exemple, l'accès d'un utilisateur à un disque dur contenant des informations à caractère professionnel peut être autorisé uniquement si le disque dur se trouve dans les locaux professionnels (facteur géolocalisation ou balise de proximité), aux heures de travail autorisées (facteur temporel), si l'utilisateur a son téléphone avec lui et si l'utilisateur a entré son mot de passe.

Avantageusement et selon l'invention, le dispositif de communication sans-fil courte portée est un dispositif de communication sans-fil en champ proche, et l'unité d'administration et l'unité utilisateur sont adaptées pour fournir une énergie électrique au module de récolte d'énergie électrique du dispositif de communication sans-fil en champ proche pour alimenter l'unité de contrôle d'accès.

Selon cet aspect de l'invention, la communication sans-fil entre l'unité d'administration et le dispositif de communication sans-fil ou entre l'unité utilisateur et le dispositif de communication sans-fil sont des communications en champ proche, de type NFC (pour *Near Field Communication* en anglais). Les communications en champ proche permettent d'augmenter la sécurité du système de contrôle d'accès, le pré-paramétrage par l'unité d'administration et la tentative de connexion par l'unité utilisateur devant se faire à proximité directe, inférieure à 20cm. En outre, l'unité d'administration et l'unité utilisateur apportent l'énergie électrique nécessaire pour alimenter l'unité de contrôle d'accès lorsqu'elles sont utilisées. Ainsi, l'unité de contrôle peut ne pas être alimentée lorsqu'elle n'est pas utilisée, la rendant notamment invisible en termes de rayonnements électromagnétiques. L'unité de contrôle peut ainsi être dissimulée et donc moins facilement détectable aux utilisateurs non informés de sa localisation.

Avantageusement et selon l'invention, l'unité de contrôle d'accès comprend au moins un commutateur pilotable configuré pour ouvrir ou fermer une alimentation électrique du dispositif protégé, indépendante de l'unité de contrôle, l'alimentation étant par défaut fermée et étant ouverte en cas de réception d'une autorisation d'accès provenant du module de vérification.

Selon cet aspect de l'invention, l'alimentation en énergie électrique du dispositif protégé est aussi contrôlée par le système de contrôle d'accès. Si l'accès n'est pas autorisé, l'alimentation est fermée et le dispositif protégé est ainsi moins visible et l'accès au contenu du dispositif sans autorisation est plus difficile.

Avantageusement, un système selon l'invention comprend une balise de proximité, externe à l'unité de contrôle, comprenant un générateur aléatoire de clé adapté pour générer périodiquement une clé de proximité et transmettre la clé de proximité à l'unité de contrôle par un protocole de communication sans-fil, ladite balise de proximité et ladite unité de contrôle étant préalablement appairées par l'unité d'administration.

Selon cet aspect de l'invention, la balise de proximité permet de savoir si le dispositif protégé est localisé dans une zone précise (dans la portée de la balise de proximité) ou en dehors de cette zone (hors de portée de la balise de proximité). La localisation du dispositif protégé par la balise de proximité permet de ne pas être tributaire d'informations de géolocalisation fournies par un utilisateur, qui peuvent être truquées. La balise de proximité peut en outre être dissimulée, l'accès au dispositif protégé étant ainsi tributaire de la balise de proximité, mais sans que l'utilisateur ne soit au courant de la nécessité de cette balise de proximité.

La clé de proximité transmise à l'unité de contrôle d'accès fait partie des clés dont on vérifie les critères de validité. La présence (ou l'absence) de cette clé de proximité peut alors être un facteur d'authentification vérifié par le module de vérification des facteurs de l'unité de contrôle d'accès.

L'invention concerne également un support de stockage de données, comprenant au moins deux mémoires protégées distinctes, caractérisé en ce que l'accès à chaque mémoire protégée est contrôlé par un système de contrôle d'accès selon l'invention.

Un support de stockage selon l'invention permet de faire cohabiter des mémoires indépendantes dans un même équipement et de leur appliquer des facteurs d'authentification différents, permettant ainsi de disposer de mémoires pouvant contenir des informations n'ayant pas vocation à être utilisées simultanément, ou ne pouvant être utilisées qu'à certaines conditions.

L'invention concerne également un procédé de contrôle d'accès à un dispositif protégé par un système de contrôle d'accès selon l'invention, caractérisé en ce qu'il comprend :
- une étape de pré-paramétrage des facteurs d'authentification par un administrateur à l'aide de l'unité d'administration,
- une étape de transmission d'au moins une clé par un utilisateur à l'aide de l'unité utilisateur,
- une étape d'ouverture du chemin d'accès au dispositif protégé si l'ensemble des facteurs d'authentification sont déverrouillés.

Avantageusement, un procédé selon l'invention comprend :
- une étape d'envoi d'une requête par l'utilisateur via l'unité utilisateur, vers l'unité d'administration,
- une étape de validation manuelle par l'administrateur de la requête via l'unité d'administration,
- une étape de transmission d'une clé de validation par l'unité d'administration à l'unité utilisateur, si la requête est validée par l'administrateur.

Selon cet aspect de l'invention, l'administrateur effectue une validation manuelle de la requête de l'utilisateur, sans traitement automatique, permettant d'accentuer la sécurité du système en autorisant uniquement les utilisateurs approuvés par l'administrateur à accéder au dispositif protégé.

L'invention concerne également un système de contrôle d'accès, un support de stockage et un procédé de contrôle d'accès caractérisé en combinaison par tout ou partie des caractéristiques mentionnées ci-dessus ou ci-après.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique d'un système de contrôle d'accès à un dispositif protégé selon un mode de réalisation de l'invention,
- la figure 2 est une vue schématique d'un support de stockage protégé par un système de contrôle d'accès selon un mode de réalisation de l'invention.

### 6. Description détaillée d'un mode de réalisation de l'invention

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations. Sur les figures, les échelles et les proportions ne sont pas strictement respectées et ce, à des fins d'illustration et de clarté.

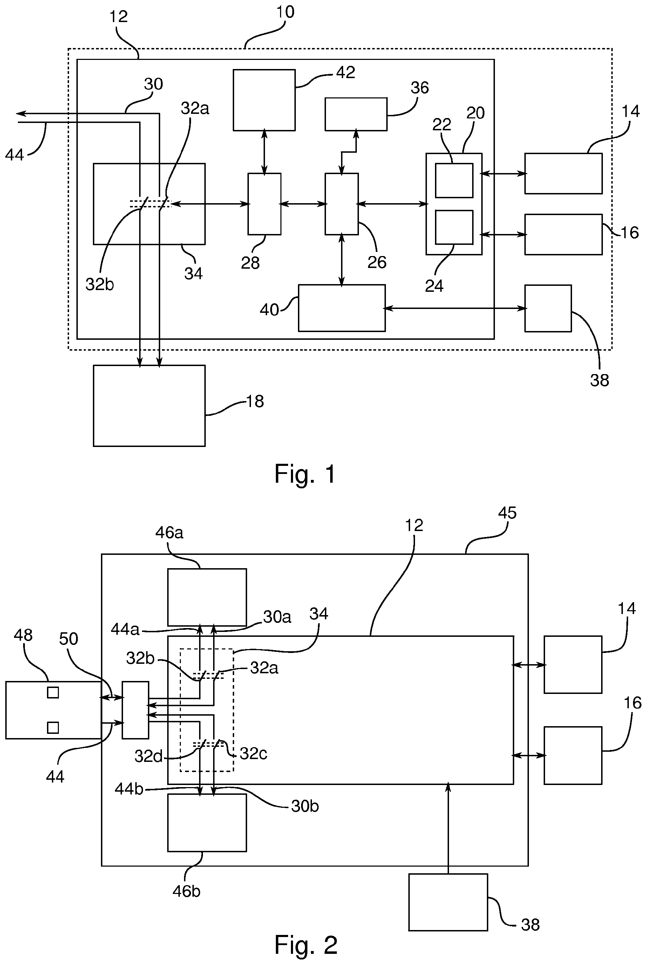

La figure 1 représente schématiquement un système 10 de contrôle d'accès selon un mode de réalisation de l'invention.

Le système 10 de contrôle comprend une unité 12 de contrôle d'accès, une unité 14 d'administration et une unité 16 utilisateur.

L'objectif du système de contrôle d'accès est de contrôler l'accès à un dispositif 18 protégé, par exemple un support de stockage, une mémoire d'un support de stockage, un véhicule en libre-service moyennant autorisation préalable, une porte d'accès, etc.

Le dispositif 18 est protégé par au moins un facteur d'authentification pré-paramétré. Le système 10 permet de contrôler la validité de clés qui lui sont présentées en fonction de chaque facteur d'authentification : un facteur d'authentification est dans un état déverrouillé si une clé qui lui est présentée répond aux critères de validité, et dans un état dit verrouillé si aucune clé qui lui est présentée ne répond aux critères de validité. Par exemple, un facteur d'authentification peut être qu'un mot de passe présenté corresponde à un mot de passe défini. Si le mot de passe présenté est identique au mot de passe défini, le facteur d'authentification est dans l'état déverrouillé.

Le dispositif 18 est protégé généralement par une pluralité de facteurs d'authentification pré-paramétrés, et l'accès au dispositif 18 protégé n'est permis qu'en cas de déverrouillage de l'ensemble des facteurs d'authentification.

Pour ce faire, l'unité 12 de contrôle d'accès comprend :
- un dispositif 20 de communication sans-fil courte portée, comprenant un module 22 de transmission sans-fil de données et un module 24 de récolte d'énergie électrique,
- un module 26 de réception de clés,
- un module 28 de vérification des facteurs,
- au moins un chemin 30 d'accès au dispositif protégé,
- au moins un commutateur pilotable, ici un premier commutateur 32a pilotable et un deuxième commutateur 32b pilotable, réunis dans un module 34 de commutation.

Dans tout le texte, on désigne par module, un élément logiciel, un sous-ensemble d'un programme logiciel, pouvant être compilé séparément, soit pour une utilisation indépendante, soit pour être assemblé avec d'autres modules d'un programme, ou un élément matériel, ou une combinaison d'un élément matériel et d'un sous-programme logiciel. Un tel élément matériel peut comprendre un circuit intégré propre à une application (plus connue sous l'acronyme ASIC pour la dénomination anglaise *Application-Specific Integrated Circuit*) ou un circuit logique programmable (plus connu sous l'acronyme FPGA pour la dénomination anglaise *Field-Programmable Gate Array)* ou un circuit de microprocesseurs spécialisés (plus connu sous l'acronyme DSP pour la dénomination anglaise *Digital Signal Processor*) ou tout matériel équivalent. D'une manière générale, un module est donc un élément (logiciel et/ou matériel) qui permet d'assurer une fonction.

Le module 26 de réception de clés permet la réception d'une clé ou plusieurs clés transmises par différents éléments, par exemple l'unité 16 utilisateur, un ou plusieurs capteurs 36 externes, une balise 38 de proximité via un module 40 de réception sans-fil, etc.

L'ensemble des clés reçues sont transmises au module 28 de vérification des facteurs, qui vérifie la validité de chaque facteur d'authentification, c'est-à-dire vérifie si au moins une clé transmise valide les critères de chaque facteur d'authentification. Pour cette vérification, le module 28 de vérification a accès à une mémoire 42 sécurisée comprenant les facteurs d'authentification pré-paramétrés et les critères associés.

Les transmissions des clés jusqu'au module 28 de vérification des facteurs s'effectuent de manière chiffrée, le déchiffrement des clés se faisant uniquement au module 28 de vérification des clés (par un microprogramme de déchiffrement), pour davantage de sécurité. Le module 28 de vérification des clés et la mémoire 42 sécurisée sont de préférence réunis dans un même composant sécurisé, afin que les clés déchiffrées ne soient pas accessibles en dehors de ce composant.

Si l'ensemble des facteurs d'authentification sont déverrouillés suite à leur vérification, le module 28 de vérification de clé fournit une autorisation d'accès, transmise au module 34 de commutation.

L'autorisation d'accès au dispositif 18 protégé entraine la commutation des commutateurs liés au dispositif 18 protégé : le premier commutateur 32a pilotable est électriquement fermé de façon à ouvrir le chemin 30 d'accès au dispositif 18 protégé en cas de réception d'une autorisation d'accès, ou électriquement ouvert de façon à fermer le chemin 30 d'accès si aucune autorisation n'est reçue (donc par défaut). En outre, le deuxième commutateur 32b pilotable peut aussi être activé en même temps que le premier commutateur 32a pilotable, ce deuxième commutateur 32b étant relié à une alimentation 44 électrique du dispositif 18 protégé : de façon analogue, le deuxième commutateur 32b est électriquement fermé de façon à alimenter le dispositif 18 protégé en cas de réception d'une autorisation d'accès, ou électriquement ouvert de façon à bloquer l'alimentation 44 du dispositif 18 protégé si aucune autorisation d'accès n'est reçue.

Ainsi, sans autorisation d'accès, le dispositif 18 protégé n'est ni accessible, ni alimenté. Si ce dispositif 18 protégé est une mémoire, il est impossible d'échanger des données avec cette mémoire, ni d'accéder aux données, et la mémoire n'est pas visible.

L'accès au dispositif 18 protégé est réglementé par un administrateur, permettant de déterminer qui a accès au dispositif 18 protégé et sous quelles conditions. L'utilisateur souhaite accéder au dispositif 18 protégé, et doit donc remplir les conditions fixées par l'administrateur.

L'administrateur pré-paramètre les facteurs d'authentification du dispositif 18 protégé grâce à l'unité 14 d'administration. L'unité 14 d'administration est par exemple un smartphone comprenant un logiciel (ou application) permettant le choix des facteurs d'authentification et le pré-paramétrage de ces facteurs. L'unité 14 d'administration permet la transmission des facteurs d'authentification choisis dans la mémoire sécurisée, via le dispositif 20 de communication sans-fil courte portée. Les données contenant les facteurs d'authentifications (transmises sous forme chiffrée) sont transmises via le module 22 de transmission sans-fil.

Le dispositif 20 de communication sans-fil comprend aussi un module 24 de récolte d'énergie, permettant de récolter de l'énergie de différentes sources (photovoltaïques, cinétiques, thermoélectrique), notamment provenant de l'unité 14 d'administration (par induction électromagnétique). Le module 24 de récolte d'énergie permet d'alimenter l'unité 12 de contrôle d'accès, en particulier tous les modules de l'unité 12 de contrôle d'accès.

Dans ce mode de réalisation, le dispositif 20 de communication sans-fil est un dispositif de communication sans-fil en champ proche, de type NFC. Le module 24 de récolte d'énergie est ainsi adapté pour récolter de l'énergie de l'unité 14 d'administration, afin d'alimenter l'unité 12 de contrôle le temps d'effectuer le pré-paramétrage des facteurs d'authentification.

Une fois les facteurs pré-paramétrés, le dispositif 18 est protégé par les facteurs d'authentification. Notamment, le chemin 30 d'accès au dispositif 18 protégé est fermé par défaut (et éventuellement le dispositif 18 protégé n'est pas alimenté électriquement).

Lorsqu'un utilisateur souhaite accéder au dispositif 18 protégé, il doit ouvrir le chemin 30 d'accès (et éventuellement l'alimentation 44 électrique) du dispositif 18 protégé. Pour cela, il doit remplir les critères définis par l'ensemble des facteurs d'authentification. Des clés sont reçues par le module 26 de réception de clé, transmises au module 28 de vérification de clés et vérifiées, comme expliqué précédemment. L'utilisateur utilise l'unité 16 utilisateur pour accéder au dispositif 18 protégé. L'unité 16 utilisateur est par exemple un smartphone comprenant un logiciel (ou application) permettant une tentative d'accès au dispositif 18 protégé, et la transmission d'au moins une clé. L'unité 16 utilisateur communique avec le module 22 de transmissions sans-fil du dispositif 20 de communication sans-fil courte portée par un protocole de communication sans-fil courte portée tel que par exemple IEEE 802.15.1 (notamment Bluetooth), IEEE 802.15.11 (notamment Wi-Fi), etc. De manière préférentielle, la communication se fait en champ proche (distance généralement inférieure à 20cm, de préférence inférieure à 10cm) via une technologie telle que le NFC.

Comme l'unité 14 d'administration, l'unité 16 utilisateur peut apporter l'énergie électrique nécessaire au fonctionnement de l'unité 12 de contrôle par induction électromagnétique. Dans certains modes de réalisation, l'unité 12 de contrôle peut n'être fonctionnelle que lorsque qu'une unité 14 d'administration ou une unité 16 utilisateur fournit de l'énergie, et être éteinte le reste du temps, de façon à dissimuler sa présence en réduisant les émissions électromagnétiques.

Au moins une clé reçue est transmise par l'unité 16 utilisateur. Cette clé peutêtre une clé vérifiant un facteur simple, par exemple uniquement le fait que l'unité 16 utilisateur est présente et qu'un utilisateur souhaite accéder au dispositif 18 protégé, ou bien un facteur plus complexe, tel qu'un mot de passe entré par l'utilisateur dans l'application de l'unité 16 utilisateur. L'unité 16 utilisateur peut aussi transmettre plusieurs clés, dont certaines indépendamment d'une volonté de l'utilisateur, pour déverrouiller ou verrouiller certains facteurs d'authentification : par exemple, des clés peuvent être des valeurs enregistrées par des capteurs de l'unité 16 utilisateur (capteur de température, gyroscope, géolocalisation, horloge, etc.), ou un numéro d'identification du téléphone. Par exemple, l'accès au dispositif 18 protégé peut n'être autorisé que si l'utilisateur utilise un téléphone autorisé, que si le téléphone est disposé dans une certaine configuration (posé sur un meuble donc horizontalement par exemple), si la température est comprise dans une certaine plage, etc.

De même, lors d'une tentative d'accès au dispositif 18 protégé par un utilisateur, le module 26 de réception de clé peut recevoir des clés provenant des capteurs 36 externes. Les clés peuvent être des valeurs enregistrées par les capteurs 36 externes (capteur de température, gyroscope, géolocalisation, horloge, capteur de fumées, capteur chimique, etc.). Par exemple, l'accès au dispositif 18 protégé peut être interdit en dehors de plages horaires prédéterminées, si l'utilisateur a dépassé un temps maximum de connexion, si le dispositif 18 protégé n'est pas dans une disposition particulière ; une porte d'accès peut ne pas être déverrouillée si un capteur chimique détecte une présence anormale d'un composant chimique dans la salle à laquelle la porte donne accès, etc.

Une clé fournie par l'unité 16 utilisateur peut aussi être fournie par un administrateur, via l'unité 14 d'administration. Pour obtenir cette clé, l'utilisateur envoie une requête via l'unité 16 utilisateur, vers l'unité 14 d'administration. Cette requête est par exemple envoyée par SMS (pour *Short Messaging Service* en anglais) depuis l'application de l'unité 16 utilisateur. L'administrateur reçoit la requête sur l'unité 14 d'administration, et valide manuellement (ou ne valide pas) la requête. Les critères de validation sont choisis par l'administrateur : par exemple, si un identifiant de l'unité 16 utilisateur (son numéro de téléphone par exemple) appartient à une liste approuvée par l'administrateur, il peut choisir de valider la requête. Si l'administrateur manque d'informations sur l'utilisateur, il peut l'appeler par liaison téléphonique entre l'unité 14 d'administration et l'unité 16 utilisateur avant de décider de valider ou non la requête. Une fois la requête validée par l'administrateur, l'unité 14 d'administration envoie une clé à l'unité 16 utilisateur, lui permettant de déverrouiller au moins un facteur d'authentification. La clé peut être paramétrée, par exemple valable uniquement pendant un intervalle de temps spécifique ou selon la géolocalisation de l'unité 16 utilisateur ou du dispositif 18 protégé.

Dans ce mode de réalisation, le module de réception de clé peut aussi recevoir des clés d'une balise 38 de proximité, via le module 40 de réception sans-fil de l'unité 12 de contrôle. Cette balise 38 de proximité envoie en permanence une clé générée aléatoirement (et chiffrée), dite clé de proximité. Lors du pré-paramétrage, l'unité 14 administrateur peut appairer l'unité 12 de contrôle et la balise 38 de proximité, de sorte que l'unité 12 de contrôle considère la réception de la clé de proximité provenant de la balise 38 de proximité comme un des facteurs d'authentification.

La balise 38 de proximité communique via un protocole de communication sans-fil courte portée, qui peut être identique ou différent du protocole de communication entre l'unité 16 utilisateur et le dispositif 20 de communication sans-fil. Si les deux protocoles de communication sont différents, l'interception de la ou des clés fournies par l'utilisateur et de la clé de proximité émise par la balise 38 de proximité est complexifiée, car il faut récupérer des trames de deux protocoles différents.

En outre, la balise 38 de proximité est généralement cachée de l'utilisateur, et permet de s'assurer de la présence de l'utilisateur à proximité de cette balise 38 (dans la distance permise par la communication sans-fil courte portée). Par exemple, une balise 38 de proximité dissimulée dans un local professionnel permet de s'assurer que l'accès au dispositif 18 protégé, par exemple un support de stockage, n'est possible que lorsque le support de stockage est à proximité de la balise 38 de proximité, et donc dans le local professionnel. L'utilisateur peut ne pas savoir que sa proximité avec la balise 38 de proximité est une condition du déverrouillage du support de stockage, ce qui permet d'accroître la protection aux intrusions.

Le facteur d'authentification peut aussi être exclusif, c'est-à-dire que l'accès au dispositif est autorisé si une clé n'est pas dans une valeur précise ou si une clé n'est pas reçue. Notamment, dans l'exemple de la balise 38 de proximité dans un local professionnel, l'accès à un dispositif 18 protégé, par exemple un support de stockage comprenant des données personnelles, peut être verrouillé si le dispositif 18 protégé est à proximité de la balise 38 de proximité et donc dans le local professionnel. Le critère ainsi défini par le facteur d'authentification est la non-réception d'une clé provenant de la balise 38 de proximité.

Une application de cet exemple est présentée plus en détail en référence avec la figure 2, représentant schématiquement un support 45 de stockage protégé par un système de contrôle d'accès selon un mode de réalisation de l'invention.

En particulier, le support 45 de stockage comprend deux mémoires protégées, distinctes, indépendantes et séparées (dans des composants différents), une première mémoire 46a protégée et une deuxième mémoire 46b protégée.

Le support 45 de stockage comprend un connecteur, ici un connecteur 48 USB (pour *Universal Serial Bus* en anglais), permettant, grâce à une pluralité de broches (non représentées), de transmettre des données via un bus 50 de transmission de données et d'alimenter le support 45 de stockage avec une alimentation 44 électrique. Le support 45 de stockage peut être par exemple une clé USB ou un disque dur externe, branchée sur un ordinateur grâce au connecteur 48 USB. Le support 45 de stockage peut aussi être un disque dur interne d'un ordinateur, branché directement à l'intérieur de l'ordinateur via un connecteur spécifique.

Le support 45 de stockage comprend une unité 12 de contrôle du système de contrôle d'accès, telle que décrite précédemment en référence avec la figure 1. Les interactions avec l'unité 12 de contrôle s'effectuent, comme décrit précédemment, grâce à une unité 14 d'administration (pour le pré-paramétrage) et une unité 16 utilisateur (pour la tentative d'accès).

L'unité 12 de contrôle permet de contrôler l'accès aux deux mémoires protégées et leur alimentation. Chaque mémoire protégée peut être considérée comme un dispositif protégé par le système de contrôle d'accès. L'accès à chaque mémoire protégée contrôlée est régi par un ensemble de facteurs d'authentification propre à chaque mémoire protégée. Pour ce faire, l'unité 12 de contrôle comprend des commutateurs pilotables réunis dans un module 34 de commutation, ici :
- un premier commutateur 32a pilotable et un deuxième commutateur 32b pilotable, permettant d'ouvrir/fermer respectivement l'accès aux données de la première mémoire 46a protégée et l'alimentation de la première mémoire 46a protégée,
- un troisième commutateur 32c pilotable et un quatrième commutateur 32d pilotable, permettant d'ouvrir/fermer respectivement l'accès aux données de la deuxième mémoire 46b protégée et l'alimentation de la deuxième mémoire 46b protégée.

Les commutateurs pilotables sont pilotés en fonction de la réception ou non d'une autorisation d'accès, comme décrit précédemment.

Un tel support 45 de stockage est particulièrement adapté pour une application professionnelle et personnelle, ou pour de la dissimulation de données.

Dans l'application professionnelle et personnelle, la première mémoire 46a protégée est par exemple une mémoire dédiée à des données personnelles, et la deuxième mémoire 46b protégée est dédiée à des données professionnelles. Lorsque l'utilisateur est en dehors des locaux professionnels, il est autorisé à accéder uniquement à la première mémoire 46a protégée. Lorsque l'utilisateur est dans les locaux professionnels, une balise 38 de proximité telle que décrite précédemment permet d'autoriser l'accès de la deuxième mémoire 46b protégée et de bloquer l'accès à la première mémoire 46a protégée, permettant ainsi de s'assurer que des données personnelles ne sont jamais accessibles dans le milieu professionnel et que les données professionnelles ne sont jamais accessibles dans le milieu personnel. Si les mémoires protégées comprennent chacune un système d'exploitation, il est possible d'utiliser deux systèmes d'exploitation différents et totalement séparés (un système n'ayant pas accès aux données de l'autre système), ce qui est particulièrement utile pour les pratiques dites de BYOD (*Bring Your Own Device* en anglais, soit « apportez votre appareil personnel ») ou COPE (*Corporate Owned, Personally Enabled* en anglais, soit « appartient à l'entreprise, autorisé en privé ») dans lesquels la même machine peut ainsi être utilisée pour des raisons personnelles ou professionnelles sans risques accrus de sécurité.

Dans l'application de dissimulation de données, une première mémoire 46a protégée peut comprendre des données quelconques et être accessible par défaut. Une deuxième mémoire 46b protégée comprend des données confidentielles, et n'est accessible et visible qu'en validant les critères des facteurs d'authentification. Ainsi, si le support de stockage est branché à un ordinateur pour en vérifier le contenu, seule la première mémoire 46a protégée sera accessible et visible, ce qui attire moins l'attention que si aucune mémoire n'était accessible ou visible. La deuxième mémoire 46b protégée n'est donc pas vérifiée car non visible.

## Revendications

1. Système de contrôle d'accès à un dispositif (18) protégé par au moins un facteur d'authentification pré-paramétré, chaque facteur d'authentification définissant au moins un critère de validité d'une clé et étant dans un état dit déverrouillé si une clé qui lui est présentée répond aux critères de validité, et un état dit verrouillé si aucune clé qui lui est présentée ne répond aux critères de validité, comprenant :
- une unité (12) de contrôle d'accès comprenant :
- un dispositif (20) de communication sans-fil courte portée, comprenant un module (22) de transmission sans-fil de données et un module (24) de récolte d'énergie électrique,
- un module (26) de réception de clés, adapté pour recevoir au moins une clé,
- un module (28) de vérification des facteurs, adapté pour vérifier la validité de chaque facteur d'authentification pré-paramétré avec au moins une clé reçue par le module (26) de réception de clé et fournir une autorisation d'accès si l'ensemble des facteurs d'authentification sont dans l'état déverrouillé,
- au moins un chemin (30) d'accès, adapté pour permettre l'accès au dispositif (18) protégé,
- au moins un commutateur (32a, 32c) pilotable, configuré pour ouvrir ou fermer le chemin (30) d'accès au dispositif (18) protégé, le chemin (30) d'accès étant par défaut fermé et étant ouvert en cas de réception d'une autorisation d'accès provenant du module (28) de vérification,
- une unité (14) d'administration, adaptée pour permettre de pré-paramétrer chaque facteur d'authentification par interaction avec le module (22) de transmission sans-fil de données du dispositif (20) de communication de l'unité (12) de contrôle d'accès,
- une unité (16) utilisateur, distincte de l'unité d'administration, configurée pour transmettre au moins une clé au module (26) de réception de clés, via le module (22) de transmission sans-fil de données.

2. Système de contrôle selon la revendication 1, **caractérisé en ce que** chaque facteur d'authentification définit au moins un critère de validité d'une clé choisie dans le groupe comprenant les clés suivantes :
- mot de passe,
- clé transmise par l'unité (14) d'administration,
- données de géolocalisation du dispositif (18) protégé et/ou de l'unité (16) utilisateur,
- valeurs mesurées par un ou plusieurs capteurs électroniques,
- données temporelles,
- clé provenant d'une balise (38) de proximité.

3. Système de contrôle selon l'une des revendications 1 ou 2, **caractérisé en ce que** le dispositif (20) de communication sans-fil courte portée est un dispositif de communication sans-fil en champ proche, et **en ce que** l'unité (14) d'administration et l'unité (16) utilisateur sont adaptées pour fournir une énergie électrique au module (24) de récolte d'énergie électrique du dispositif (20) de communication sans-fil en champ proche pour alimenter l'unité (12) de contrôle d'accès.

4. Système de contrôle selon l'une des revendications 1 à 3, **caractérisé en ce que** l'unité (12) de contrôle d'accès comprend au moins un commutateur (32b, 32d) pilotable configuré pour ouvrir ou fermer une alimentation (44, 44a, 44b) électrique du dispositif (18) protégé, indépendante de l'unité (12) de contrôle, l'alimentation (44, 44a, 44b) étant par défaut fermée et étant ouverte en cas de réception d'une autorisation d'accès provenant du module (28) de vérification.

5. Système de contrôle selon l'une des revendications 1 à 4, **caractérisé en ce qu'**il comprend une balise (38) de proximité, externe à l'unité (12) de contrôle, comprenant un générateur aléatoire de clé adapté pour générer périodiquement une clé de proximité et transmettre la clé de proximité à l'unité (12) de contrôle par un protocole de communication sans-fil, ladite balise (38) de proximité et ladite unité (12) de contrôle étant préalablement appairées par l'unité (14) d'administration.

6. Support de stockage de données, comprenant au moins deux mémoires (46a, 46b) protégées distinctes, **caractérisé en ce que** l'accès à chaque mémoire (46a, 46b) protégée est contrôlé par un système (10) de contrôle d'accès selon l'une des revendications 1 à 5, ce système (10) de contrôle d'accès étant compris dans le support de stockage.

7. Procédé de contrôle d'accès à un dispositif (18) protégé par un système (10) de contrôle d'accès selon l'une des revendications 1 à 5, **caractérisé en ce qu'**il comprend :
- une étape de pré-paramétrage des facteurs d'authentification par un administrateur à l'aide de l'unité (14) d'administration,
- une étape de transmission d'au moins une clé par un utilisateur à l'aide de l'unité (16) utilisateur,
- une étape d'ouverture du chemin (30) d'accès au dispositif (18) protégé si l'ensemble des facteurs d'authentification sont déverrouillés.

8. Procédé de contrôle d'accès selon la revendication 7, **caractérisé en ce qu'**il comprend :
- une étape d'envoi d'une requête par l'utilisateur via l'unité (16) utilisateur, vers l'unité (14) d'administration,
- une étape de validation manuelle par l'administrateur de la requête via l'unité (14) d'administration,
- une étape de transmission d'une clé de validation par l'unité (14) d'administration à l'unité (16) utilisateur, si la requête est validée par l'administrateur.

## Patentansprüche

1. Zugangssteuerungssystem zu einer durch mindestens einen im Voraus parametrisierten Authentifizierungsfaktor geschützten Vorrichtung (18), wobei jeder Authentifizierungsfaktor mindestens ein Gültigkeitskriterium eines Schlüssels definiert und sich in einem als entriegelten bezeichneten Zustand befindet, wenn ein Schlüssel, der ihm präsentiert wird, die Gültigkeitskriterien erfüllt, und in einem als verriegelten bezeichneten Zustand, wenn kein Schlüssel, der ihm präsentiert wird, die Gültigkeitskriterien erfüllt, umfassend:
- eine Zugangssteuerungseinheit (12), umfassend:
- eine drahtlose Kommunikationsvorrichtung (20) mit kurzer Reichweite, umfassend ein drahtloses Datenübertragungsmodul (22) und ein elektrisches Energy-Harvesting-Modul Elektrizitätsgewinnungsmodul (24),
- ein Schlüsselempfangsmodul (26), das angepasst ist, um mindestens einen Schlüssel zu empfangen,
- ein Faktorverifizierungsmodul (28), das angepasst ist, um die Gültigkeit jedes im Voraus parametrisierten Authentifizierungsfaktors mit mindestens einem von dem Schlüsselempfangsmodul (26) empfangenen Schlüssel zu verifizieren und eine Zugangsgenehmigung bereitzustellen, wenn die Gesamtheit der Authentifizierungsfaktoren im entriegelten Zustand ist,
- mindestens einen Zugangspfad (30), der angepasst ist, um den Zugang zur geschützten Vorrichtung (18) zu ermöglichen,
- mindestens einen regelbaren Schalter (32a, 32c), der konfiguriert ist, um den Zugangspfad (30) zur geschützten Vorrichtung (18) zu öffnen oder zu schließen, wobei der Zugangspfad (30) standardmäßig geschlossen ist und im Falle eines Empfangs einer von dem Verifizierungsmodul (28) stammenden Zugangsgenehmigung geöffnet ist,
- eine Verwaltungseinheit (14), die angepasst ist, um zu ermöglichen, jeden Authentifizierungsfaktor durch Interaktion mit dem drahtlosen Datenübertragungsmodul (22) der Kommunikationseinheit (20) der Zugangssteuerungseinheit (12) im Voraus zu parametrisieren,
- eine von der Verwaltungseinheit unterschiedliche Benutzereinheit (16), die konfiguriert ist, um mindestens einen Schlüssel über das drahtlose Datenübertragungsmodul (22) an das Schlüsselempfangsmodul (26) zu übertragen.

2. Steuerungssystem nach Anspruch 1, **dadurch gekennzeichnet, dass** jeder Authentifizierungsfaktor mindestens ein Gültigkeitskriterium eines Schlüssels definiert, der aus der Gruppe ausgewählt ist, die die folgenden Schlüssel umfasst:
- Passwort,
- von der Verwaltungseinheit (14) übertragener Schlüssel,
- Geolokalisierungsdaten der geschützten Vorrichtung (18) und/oder der Benutzereinheit (16),
- von einem oder mehreren elektronischen Sensoren gemessene Werte,
- Zeitangaben,
- von einer Näherungsbake (38) stammender Schlüssel.

3. Steuerungssystem nach einem der Ansprüche 1 oder 2, **dadurch gekennzeichnet, dass** die drahtlose Kommunikationsvorrichtung (20) mit kurzer Reichweite ein Nahfeld-Drahtlosekommunikationsvorrichtung ist, und dass die Verwaltungseinheit (14) und die Benutzereinheit (16) angepasst sind, elektrische Energie ans das elektrische Energy-Harvesting-Modul Elektrizitätsgewinnungsmodul (24) der drahtlosen Nahbereichskommunikationsvorrichtung (20) eine Elektrizität zum Speisen der Zugangsteuerungseinheit (12) bereitzustellen.

4. Steuerungssystem nach einem der Ansprüche 1 bis 3, **dadurch gekennzeichnet, dass** die Zugangsteuerungseinheit (12) mindestens einen regelbaren Schalter (32b, 32d) umfasst, der konfiguriert ist, um eine von der Steuerungseinheit (12) unabhängige elektrische Speisung (44, 44a, 44b) der geschützten Vorrichtung (18) zu öffnen oder zu schließen, wobei die Speisung (44, 44a, 44b) standardmäßig geschlossen ist und im Falle eines Empfangs einer von dem Verifizierungsmodul (28) stammenden Zugangsgenehmigung geöffnet ist.

5. Steuerungssystem nach einem der Ansprüche 1 bis 4, **dadurch gekennzeichnet, dass** es eine Näherungsbake (38) außerhalb der Steuerungseinheit (12) umfasst, die einen Schlüsselzufallsgenerator umfasst, der angepasst ist, um periodisch einen Näherungsschlüssel zu erzeugen und den Näherungsschlüssel über ein drahtloses Kommunikationsprotokoll an die Steuerungseinheit (12) zu übertragen, wobei die Näherungsbake (38) und die Steuerungseinheit (12) vorab von der Verwaltungseinheit (14) gepaart werden.

6. Datenspeicherungsträger, umfassend mindestens zwei unterschiedliche geschützte Speicher (46a, 46b), **dadurch gekennzeichnet, dass** der Zugang zu jedem geschützten Speicher (46a, 46b) durch ein Zugangssteuerungssystem (10) nach einem der Ansprüche 1 bis 5 gesteuert wird, wobei dieses Zugangssteuerungssystem (10) im Speicherungsträger umfasst ist.

7. Verfahren zur Zugangssteuerung zu einer durch ein Zugangssteuerungssystem (10) nach einem der Ansprüche 1 bis 5 geschützten Vorrichtung (18), **dadurch gekennzeichnet, dass** es umfasst:
- einen Schritt der Parametrisierung der Authentifizierungsfaktoren im Voraus durch einen Verwalter mithilfe der Verwaltungseinheit (14),
- einen Schritt der Übertragung mindestens eines Schlüssels durch einen Benutzer mithilfe der Benutzereinheit (16),
- einen Schritt der Öffnung des Zugangspfads (30) zu der geschützten Vorrichtung (18), wenn die Gesamtheit der Authentifizierungsfaktoren entriegelt ist.

8. Verfahren zur Zugangssteuerung nach Anspruch 7, **dadurch gekennzeichnet, dass** es umfasst:
- einen Schritt der Sendung einer Anfrage, durch den Benutzer über die Benutzereinheit (16), an die Verwaltungseinheit (14),
- einen Schritt der manuellen Validierung, durch den Administrator, der Anfrage über die Verwaltungseinheit (14),
- einen Schritt der Übertragung eines Validierungsschlüssels durch die Verwaltungseinheit (14) an die Benutzereinheit (16), wenn die Anfrage von dem Administrator validiert ist.

## Claims

1. Access control system to a device (18) protected by at least one pre-configured authentication factor, each authentication factor defining at least one validity criterion for a key and being in a state referred to as unlocked if a key that is presented to it meets the validity criteria, and a state referred to as locked if no key that is presented to it meets the validity criteria, comprising:
- an access control unit (12) comprising:
- a short-range wireless communication device (20), comprising a wireless data transmission module (22) and an electrical energy collection module (24),
- a module (26) for receiving keys, adapted to receive at least one key,
- a module (28) for verifying factors, adapted to verify the validity of each pre-configured authentication factor with at least one key received by the module (26) for receiving keys, and to provide an access authorisation if all the authentication factors are in the unlocked state,
- at least one access path (30), adapted to allow access to the protected device (18),
- at least one controllable switch (32a, 32c), configured to open or close the path (30) for accessing the protected device (18), the access path (30) being, by default, closed and being open in case of receiving an access authorisation coming from the module (28) for verifying factors,
- an administration unit (14), adapted to allow to pre-configure each authentication factor by interaction with the wireless data transmission module (22) of the communication device (20) of the access control unit (12),
- a user unit (16), different from the administration unit (14), configured to transmit at least one key to the module (26) for receiving keys, via the wireless data transmission module (22).

2. Access control system according to claim 1, **characterised in that** each authentication factor defines at least one validity criterion of a key chosen from the group comprising the following keys:
- password,
- key transmitted by the administration unit (14),
- geolocation data of the protected device (18) and/or the user unit (16),
- values measured by one or more electronic sensors,
- time data,
- key coming from a proximity tag (38).

3. Access control system according to one of claims 1 or 2, **characterised in that** the short-range wireless communication device (20) is a wireless near-field communication device, and **in that** the administration unit (14) and the user unit (16) are adapted to supply electrical energy to the electrical energy collection module (24) of the wireless near-field communication device (20) to supply the access control unit (12).

4. Access control system according to one of claims 1 to 3, **characterised in that** the access control unit (12) comprises at least one controllable switch (32b, 32d) configured to open or close an electrical supply (44, 44a, 44b) of the protected device (18), independent from the control unit (12), the supply (44, 44a, 44b) being, by default, open in case of receiving an access authorisation coming from the module (28) for verifying factors.

5. Control system according to one of claims 1 to 4, **characterised in that** it comprises a proximity tag (38), external to the control unit (12), comprising a random key generator adapted to periodically generate a proximity key and to transmit the proximity key to the control unit (12) by a wireless communication protocol, said proximity tag (38) and said control unit (12) being paired beforehand by the administration unit (14).

6. Data storage medium, comprising at least two separate, protected memories (46a, 46b), **characterised in that** access to each protected memory (46a, 46b) is controlled by an access control system (10) according to one of claims 1 to 5, said access control system (10) being comprised in the data storage medium.

7. Method for controlling access to a device (18) protected by an access control system (10) according to one of claims 1 to 5, **characterised in that** it comprises:
- a step of pre-configuring authentication factors by an administrator using the administration unit (14),
- a step of transmitting at least one key by a user using the user unit (16),
- a step of opening a path (30) for accessing the protected device (18) if all the authentication factors are unlocked.

8. Access control method according to claim 7, **characterised in that** it comprises:
- a step of sending a request by the user via the user unit (16), to the administration unit (14),
- a step of manually validating, by the administrator, the request via the administration unit (14),
- a step of transmitting a validation key by the administration unit (14) to the user unit (16), if the request is validated by the administrator.
